# EUROPEAN PATENT APPLICATION

(11) **EP 2 544 084 A1**
(43) Date of publication of application: **09.01.2013**
(21) Application number: 10846948.7
(22) Date of filing: 19.10.2010
(51) Int. Cl.: G06F 3/06, G06F 13/10

(54) **STORAGE DEVICE**

(30) Priority: 04.03.2010 JP 2010047410
(71) Applicant: NEC Corporation, Tokyo 108-8001 (JP)
(72) Inventor: MATOBA, Masataka, Tokyo 108-8001 (JP)
(74) Representative: Vossius & Partner
(86) International application number: PCT/JP2010/006172
(87) International publication number: WO 2011/108041

(57) **Abstract**

A storage device 101 includes: a plurality of division processing parts 120, each configured so as to correspond to a characteristic of data to be written, for dividing the data in accordance with a previously set criterion; and a data writing part 117 for writing division data obtained by division by the division processing part into a storage device. The storage device also includes: a reception buffer 111 for receiving data to be written and temporarily storing as reception data; a division process selecting part 113 for detecting a characteristic of the reception data stored by the reception buffer and selecting the division processing part configured so as to correspond to the detected characteristic of the reception data; and a data transmitting part 114 for transmitting the reception data stored by the reception buffer, to the division processing part selected by the division process selecting part.

## Description

### TECHNICAL FIELD

The present invention relates to a storage device, more specifically, a storage device that eliminates duplicated storage of data of the same content.

### BACKGROUND ART

In recent years, various kinds of information, are digitalized with development and spread of computers. As a device for storing such digital data, there is a storage device such as a magnetic tape and a magnetic disk. Because the amount of data to be stored increases day by day and reaches a huge amount, a mass storage system is required. Moreover, as well as reduction of the cost spent for a storage device, reliability is also required. In addition, it is also required that data can be easily retrieved later. As a result, a storage system that can automatically realize increase of storage capacity and performance, eliminates duplicated storage to reduce a storage cost and has high redundancy is desired.

Under such a circumstance, in recent years, as shown in Patent Document 1, a content-addressable storage system has been developed. A content-addressable storage system distributes and stores data into a plurality of storage devices and, by a unique content address specified depending on the content of the data, specifies a storage location in which the data is stored. To be specific, a content-addressable storage system divides predetermined data into a plurality of fragments and adds a fragment as redundant data, and then stores these fragments into a plurality of storage devices, respectively.

Then, at the time of data retrieval, it is possible, by designating a content address, to retrieve data, namely, fragments stored in a storage location specified by the content address and restore the predetermined data before being divided from the fragments.

Further, as the content address, for example, a hash value of data generated so as to be unique depending on the content of the data is used. Therefore, in the case of duplicated data, by referring to data in the same storage location, it is possible to acquire data of the same content. Consequently, it is unnecessary to store the duplicated data separately, and it is possible to eliminate duplicated recording and reduce the data capacity.

[Patent Document 1] Japanese Unexamined Patent Application Publication No. 2005-235171

In order to perform deduplication of data to be stored as mentioned above, a series of stream data is divided by the unit of a predetermined data length. At this moment, the series of stream data is generally divided after being buffered once, and therefore, there is a need for unitedly configuring a module for executing a buffering process and a module for executing a division process.

Stream data have various characteristics, and it is effective to execute the buffering process and division process described above depending on the characteristics of the data. Therefore, it is desirable to develop, by the number of data characteristics, united modules for executing the buffering process and division process mentioned above depending on the respective data characteristics.

However, in the case of applying a united module for executing the buffering process and division process as mentioned above to a file system that the scale of the buffering process is large, it has been difficult to develop by the number of the characteristics of stream data. That is to say, there is a problem that a development cost increases by developing a united module for executing the buffering process and the division process depending on each of the data characteristics.

### SUMMARY

Accordingly, an object of the present invention is to solve the abovementioned problem, "increase of a development cost in a storage device."

In order to achieve the object, a storage device according to an exemplary embodiment of the present invention, comprising:
a plurality of division processing parts, each configured so as to correspond to a characteristic of data to be written, for dividing the data in accordance with a previously set criterion; and
a data writing part for writing division data obtained by division by the division processing part into a storage device,
the storage device also comprising:
   a reception buffer for receiving data to be written and temporarily storing as reception data;
   a division process selecting part for detecting a characteristic of the reception data stored by the reception buffer and selecting the division processing part configured so as to correspond to the detected characteristic of the reception data; and
   a data transmitting part for transmitting the reception data stored by the reception buffer, to the division processing part selected by the division process selecting part.

Further, a computer program according to another exemplary embodiment of the present invention is a program for causing an information processing device including a reception buffer for receiving data to be written and temporarily storing as reception data, to realize:
a plurality of division processing parts, each configured so as to correspond to a characteristic of data to be written, for dividing the data in accordance with a previously set criterion;
a data writing part for writing division data obtained by division by the division processing part into a storage device;
a division process selecting part for detecting a characteristic of the reception data stored by the reception buffer and selecting the division processing part configured so as to correspond to the detected characteristic of the reception data; and
a data transmitting part for transmitting the reception data stored by the reception buffer, to the division processing part selected by the division process selecting part.

Further, a data storing method according to another exemplary embodiment of the present invention, comprising:
receiving data to be written and temporarily storing as reception data into a reception buffer;
detecting a characteristic of the reception data stored by the reception buffer and, from among a plurality of division processing parts, each configured so as to correspond to a characteristic of data to be written, for dividing the data in accordance with a previously set criterion, selecting the division processing part configured so as to correspond to the detected characteristic of the reception data;
transmitting the reception data stored in the reception buffer to the selected division processing part;
dividing transmitted data, by the division processing part; and
writing division data obtained by division by the division processing part into a storage device.

With the configurations described above, the present invention can realize efficient data storage while limiting a development cost in a storage device.

### BRIEF DESCRIPTION OF DRAWINGS

Fig. 1 is a block diagram showing a configuration of a whole system including a storage system in a first exemplary embodiment of the present invention;
Fig. 2 is a block diagram showing an outline of a configuration of the storage system in the first exemplary embodiment of the present invention.
Fig. 3 is a function block diagram showing the configuration of the storage system in the first exemplary embodiment of the present invention;
Fig. 4 is an explanation view for explaining an aspect of a data storage process in the storage system disclosed in Fig. 3;
Fig. 5 is an explanation view for explaining an aspect of the data storage process in the storage system disclosed in Fig. 3;
Fig. 6 is an explanation view for explaining an aspect of a data division process in the storage system disclosed in Fig. 3;
Fig. 7 is an explanation view for explaining an aspect of the data division process in the storage system disclosed in Fig. 3;
Fig. 8 is an explanation view for explaining an aspect of the data division process in the storage system disclosed in Fig. 3;
Fig. 9 is an explanation view for explaining an aspect of the data division process in the storage system disclosed in Fig. 3;
Fig. 10 is an explanation view for explaining an aspect of the data division process in the storage system disclosed in Fig. 3;
Fig. 11 is an explanation view for explaining an aspect of the data division process in the storage system disclosed in Fig. 3;
Fig. 12 is a flowchart showing an operation of the data division process in the storage system disclosed in Fig. 3;
Fig. 13 is a function block diagram showing a configuration of a storage system in Supplementary Note 1; and
Fig. 14 is a function block diagram showing a configuration of a storage system in Supplementary Note 2.

### EXEMPLARY EMBODIMENTS

### <First Exemplary Embodiment>

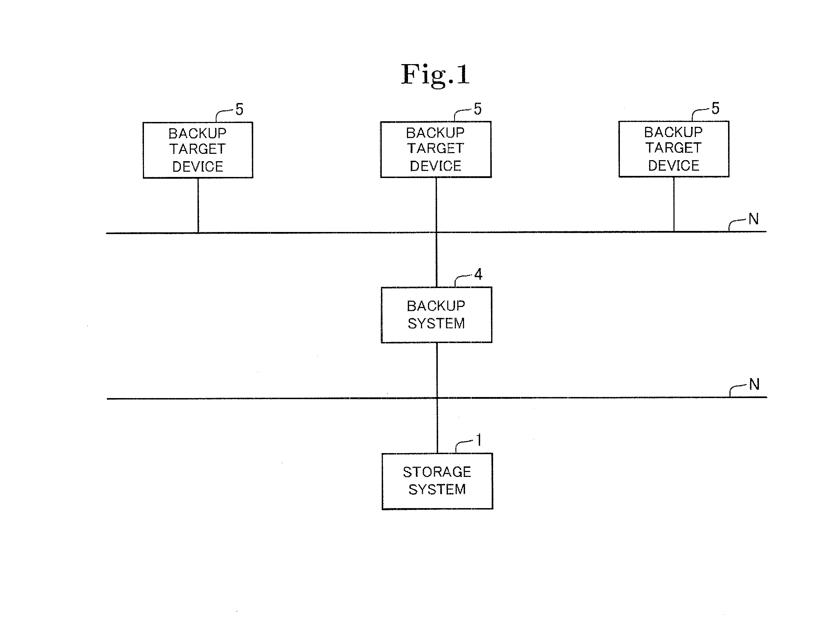

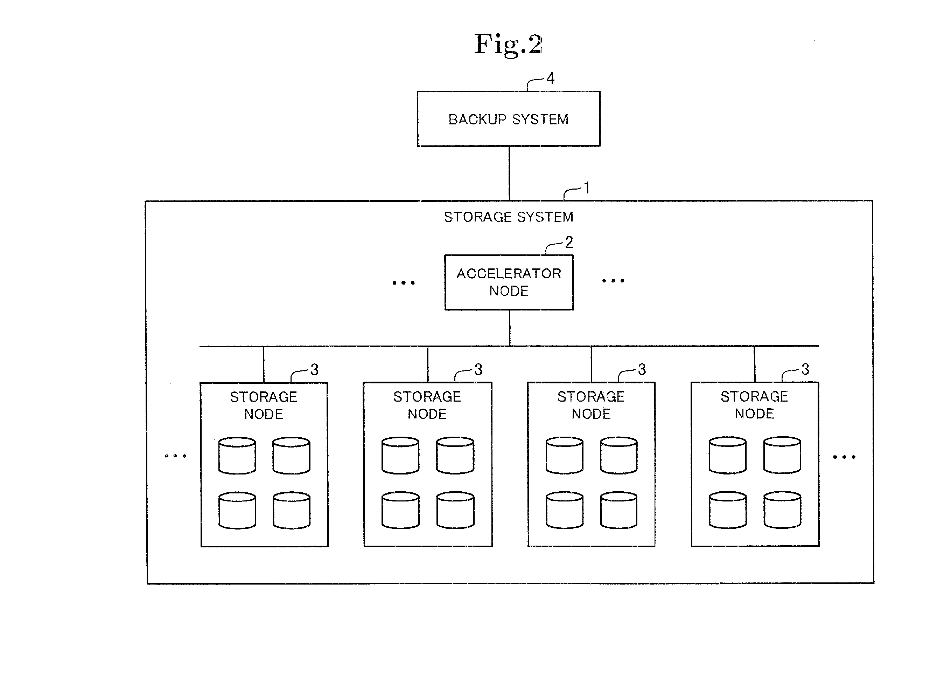

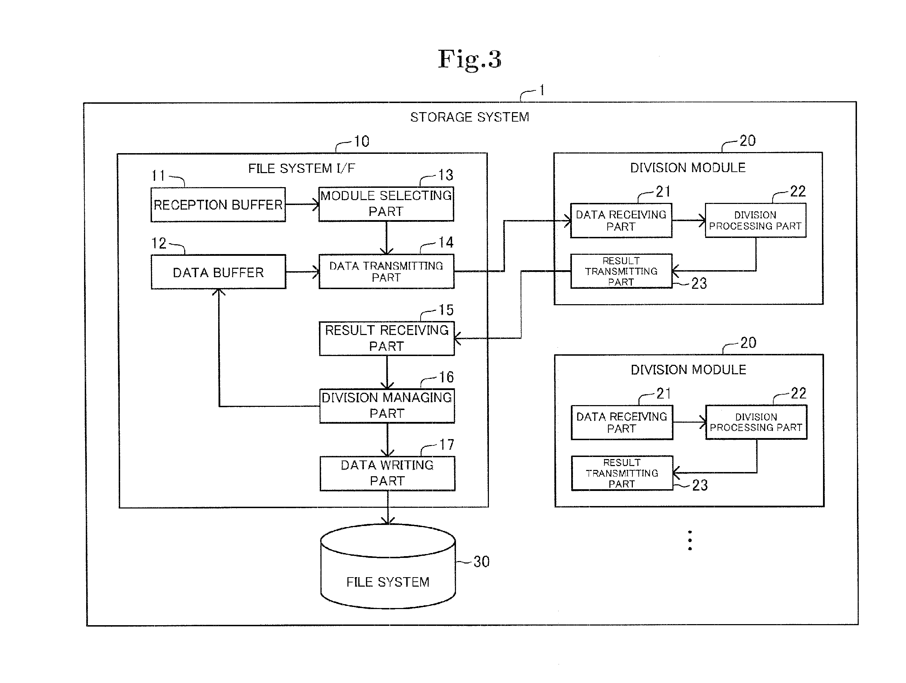

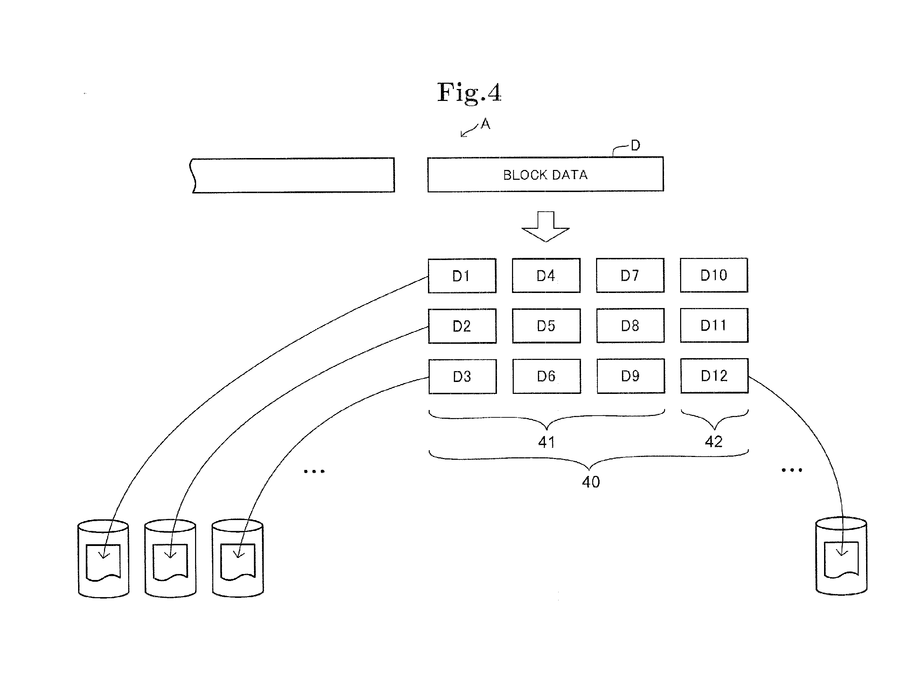

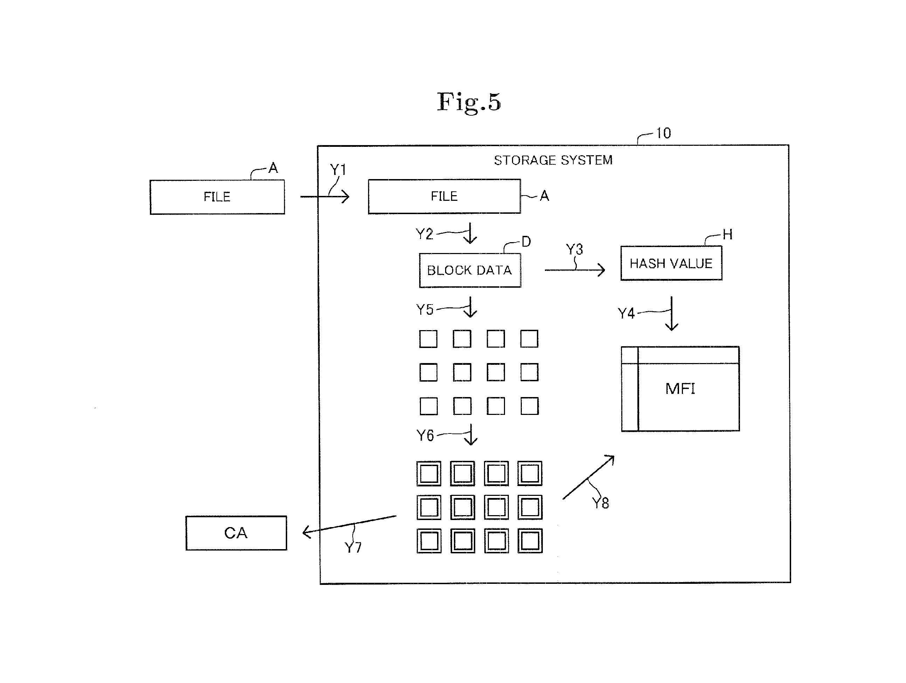

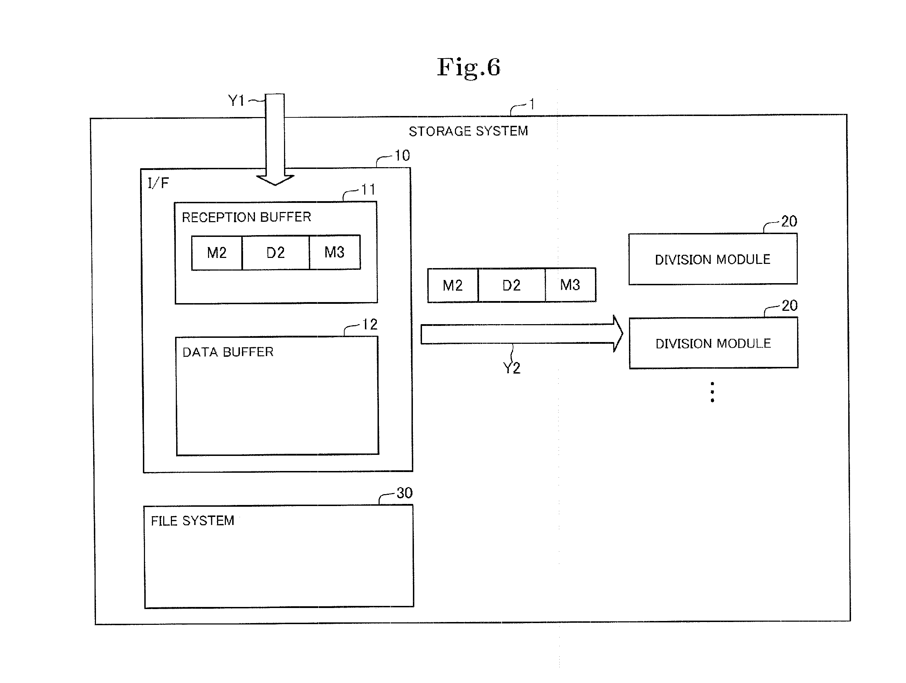

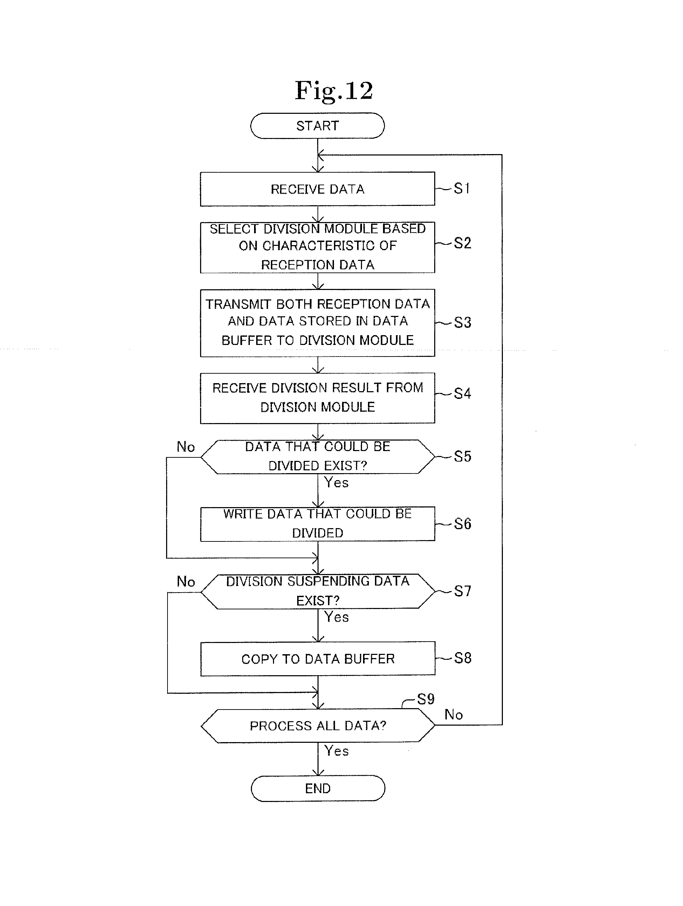

A first exemplary embodiment of the present invention will be illustrated with reference to Figs. 1 to 12. Fig. 1 is a block diagram showing a configuration of a whole system. Fig. 2 is a block diagram showing an outline of a storage system, and Fig. 3 is a function block diagram showing a configuration of the storage system. Figs. 4 and 5 are explanation views for explaining an operation of a data storage process in the storage system. Figs. 6 to 11 are explanation views for explaining an operation of a data division process in the storage system. Fig. 12 is a flowchart showing an operation of the storage system.

This exemplary embodiment shows a specific example of a storage device and the like disclosed in Supplementary Notes described later. Below, a case of configuring the storage system by connecting a plurality of server computers will be described. However, the storage system in the present invention is not limited to be configured by a plurality of computers, and may be configured by one computer.

### [Configuration]

As shown in Fig. 1, a storage system 1 according to the present invention is connected to a backup system 4 that controls a backup process via a network N. The backup system 4 acquires stream data to be backup target data stored in a backup target device 5 connected via the network N, and requests the storage system 1 to store the data. Consequently, the storage system 1 stores the stream data requested to be stored, as a backup. Data stored by the storage system 1 may be any kind of data.

As shown in Fig. 2, the storage system 1 in this exemplary embodiment employs a configuration in which a plurality of server computers are connected. To be specific, the storage system 1 includes an accelerator node 2 that is a server computer controlling a storage reproduction operation in the storage system 1, and a storage node 3 that is a server computer equipped with a storage device for storing data. The number of the accelerator node 2 and the number of the storage node 3 are not limited to those shown in Fig. 2, and the system may be configured by connecting more nodes 2 and more nodes 3.

Furthermore, the storage system 1 in this exemplary embodiment is a content-addressable storage system that divides data and makes the data redundant to distribute and store the data into a plurality of storage devices and, by a unique content address set depending on the content of the data to be stored, specifies a storage location in which the data is stored. This content-addressable storage system will be described in detail later.

Below, assuming the storage system I is one system, a configuration and function of the storage system 1 will be described. That is to say, the configuration and function of the storage system 1 described below may be included in either the accelerator node 2 or the storage node 3. The storage system 1 is not necessarily limited to being equipped with the accelerator node 2 and the storage node 3 as shown in Fig. 2, and may have any configuration. For example, the storage system 1 may be configured by one computer. Besides, the storage system I is not limited to a content-addressable storage system.

In Fig. 3, a configuration of the storage system 1 in this exemplary embodiment is shown. As shown in this figure, the storage system 1 executes a process of storing or retrieving a file A in response to a request from the backup system 4.

The storage system 1 includes a reception buffer 11, a data buffer 12, a module selecting part 13, a data transmitting part 14, a result receiving part 15, a division managing part 16, and a data writing part 17, which configure a file system I/F (interface) 10. Further, the storage system 1 includes a plurality of division modules 20 each including a data receiving part 21, a division processing part 22 and a result transmitting part 23. Furthermore, the storage system 1 includes a file system 30 as a storage device for storing data.

The reception buffer 11 and the data buffer 12 are formed on a storage device such as a flash memory, and the file system 30 is formed on a storage device such as a hard disk drive. The portions 13 to 17 and the portions 20 to 23 are structured by installation of a program into an arithmetic device mounted in the storage system 1. That is to say, the components included in the storage system 1 described above are configured by a plurality of arithmetic devices such as CPUs (Central Processing Units) and storage devices included in the accelerator nodes 2 and the storage nodes 3 shown in Fig. 2.

As mentioned above, the storage system 1 in this exemplary embodiment is a content-addressable storage system. Therefore, the aforementioned data writing part 17 has a function of storing data into the file system 30, and stores data by dividing and distributing the data and specifying a storage location by a content address as described below. A data storage process using a content address in the storage system 1 will be illustrated below with reference to Figs. 4 and 5.

At first, as shown by an arrow Y1 of Figs. 4 and 5, when accepting an input of a file A requested to be written, the storage system 1 divides the file A into block data D of a predetermined capacity (e.g., 64 KB) as shown by an arrow Y2 in Figs. 4 and 5. In this exemplary embodiment, as described later, the file A is a set of "data" portions or "marker" portions obtained by dividing by the division module 20, and the block data D is each "data" portion or each "marker" portion obtained by dividing by the division module 20. Then, based on a data content of the divided block data D, the storage system 1 calculates a unique hash value H representing the data content (an arrow Y3). For example, a hash value H is calculated from the data content of block data D by using a previously set hash function.

Subsequently, by using the hash value H of the block data D of the file A, the storage system 1 checks whether the block data D has already been stored. To be specific, firstly, in a case that the block data D has already been stored, the hash value H thereof and a content address CA representing a storage location thereof have been associated and registered in an MFI (Main Fragment Index) file. Therefore, in a case that a hash value H of block data D calculated before being stored exists in the MFI file, it is possible to judge that block data D of the same content has already been stored (an arrow Y4 of Fig. 5). In this case, the storage system 1 acquires a content address CA associated with the hash value H in the MFI, which coincides with the hash value H of the block data D before being stored, from the MFI file. Then, the storage system I returns this content address CA as the content address CA of the block data D requested to be written. Consequently, the already stored data referred to with this content address CA is used as the block data D requested to be written, and it is no more necessary to store the block data D requested to be written.

Further, in the case of judging that the block data D requested to be written has not been stored yet, the storage system 1 compresses the block data D and, as shown by an arrow Y5 in Fig. 5, divides the data into a plurality of fragment data of a predetermined capacity. For example, the storage system 1 divides the data into nine pieces of fragment data (division data 41) as shown by reference numerals D1 to D9 in Fig. 4. Moreover, the storage system 1 generates redundant data so that it is possible to restore the original block data even when some of the division fragment data are lost, and adds the redundant data to the division fragment data 41. For example, the storage system 1 adds three pieces of fragment data (redundant data 42) as shown by reference numerals D10 to D12 in Fig. 4. Consequently, a data set 40 that includes twelve pieces of fragment data configured by the nine pieces of division data 41 and the three pieces of redundant data is generated.

Subsequently, the storage system 1 distributes and stores the fragment data configuring the data set generated as described above into storage regions formed on the storage devices, respectively. For example, in the case of generating the twelve pieces of fragment data D1 to D12 as shown in Fig. 4, the storage system 1 stores the fragment data D1 to D12 one by one into data storage files formed in the plurality of storage devices, respectively (refer to an arrow Y6 in Fig. 6).

Subsequently, the storage system 1 generates and manages a content address CA representing a storage location of the fragment data D1 to D12 stored as described above, that is, a storage location of the block data D to be restored from the fragment data D1 to D12. To be specific, the storage system 1 generates the content address CA by combining part (a short hash: e.g., initial 8 B (bytes) of the hash value H) of the hash value H calculated based on the content of the stored block data D with information representing a logical storage location. The storage system 1 then returns this content address CA to the file system in the storage system 1 (an arrow Y7 in Fig. 5). The storage system 1 manages identification information such as a file name of backup target data and the content address CA in association with each other in the file system.

Further, each of the storage nodes 3 manages a content address CA of block data D and a hash value H of the block data D in association with each other in the MFI file. Thus, the content address CA is stored in association with information specifying a file, the hash value H, and so on into the storage device of the accelerator node 2 and the storage nodes 3.

Further, the storage system 1 executes control to retrieve a file stored as described above. For example, when a retrieval request with a specific file designated is issued to the storage system 1, the storage system 1 firstly designates a content address CA composed of a short hash that is part of a hash value corresponding to the file requested to be retrieved and logical location information, based on the file system. Then, the storage system 1 checks whether the content address CA is registered in the MFI file. When the content address CA is not registered, the requested data is not stored, so that the storage system 1 returns error.

On the other hand, when the content address CA relating to the retrieval request is registered, the storage system 1 specifies a storage location designated by the content address CA, and retrieves each fragment data stored in this specified storage location, as data requested to be retrieved. At this moment, in a case that data storage files storing the respective fragments and the storage location of the fragment data of one of the data storage files are known, it is possible to specify the storage location of the other fragment data based on the same storage location.

Then, the storage system 1 restores block data D from the respective fragment data retrieved in response to the retrieval request. Moreover, the storage system 1 connects a plurality of restored block data D, restores into a group of data like a file A, and returns it.

Thus, the storage system 1 in this exemplary embodiment eliminates duplication of data, and has a configuration for further increasing the efficiency in data storage. The configuration will be described in detail.

At first, the storage system 1 in this exemplary embodiment includes the plurality of division modules 20 (division processing parts) as mentioned above. Each of the division modules 20 includes the data receiving part 21 that receives data transmitted from the file system I/F 10, the division processing part 22 that divides the received data in accordance with a previously set criterion and transmits the result to the result transmitting part 23, and the result transmitting part 23 that returns the result of the division to the file system I/F 10.

Further, each of the division modules 20 is formed into an appropriate configuration for dividing data to be written having different characteristics in accordance with the respective characteristics of the data. For example, data structures vary with data types such as media data and document data, and the respective division modules 20 are configured to be capable of realizing appropriate division in accordance with the data structures.

The division processing part 22 of the division module 20 divides data into, for example, a "data" portion which is a real data portion of the data and whose value is not changed by generation time, the number of updates or the like and a "marker" portion which corresponds to the "data" portion and whose value is changed by a difference of time and number of updates such as a timestamp and a serial number. The result transmitting part 23 then returns the respective divided data to the file system I/F 10.

Because the abovementioned "marker" portion has a different value depending on a difference of time and number of updates such as a timestamp and a serial number, data including this portion may block deduplication. That is to say, it is impossible to execute deduplication on data having the same content but having different "marker" portions from each other. Therefore, by dividing data into a "data" portion and a "marker" portion as described above, it is possible to efficiently eliminate duplication storage of "data" portions when the data writing part 17 writes into the file system 30 by using the abovementioned content address.

On the other hand, for dividing data into a "data" portion and a "marker" portion as described above, data to be written transmitted from the file system I/F 10 needs to include a "data" portion and a "marker" portion corresponding to each other. Therefore, when the storage system I does not deceive part of data, it is impossible to divide the data. When it is impossible to divide the data, the result transmitting part 23 returns a data division suspending request to the file system I/F 10. At this moment, the data that cannot be divided is copied to the data buffer 12 as described later.

The abovementioned division method is one example, and a division method by the division module 20 is not limited to the abovementioned method. That is to say, the division method is not necessarily limited to dividing stream data into a "data" portion and a "marker" portion as described above.

Next, a configuration of the file system I/F 10 will be described in detail. At first, the reception buffer 11 temporarily holds stream data of a predetermined data length to be written that the file system I/F 10 has received from the backup system 4, as reception data.

Further, the module selecting part 13 (a division process selecting part) checks a characteristic such as a data type of the reception data stored in the reception buffer 11. At this moment, the module selecting part 13 detects whether the characteristic of the reception data is a characteristic which any of the division modules 20 described above corresponds to. When being able to detect as a certain data characteristic, the module selecting part 13 selects the division module 20 configured so as to correspond to the data characteristic.

Further, the data transmitting part 14 transmits the reception data stored in the reception buffer 11 to the division module 20 selected by the module selecting part 13 described above. That is to say, the data transmitting part 14 transmits the reception data to the division module 20 corresponding to the characteristic of the reception data. At this moment, the data transmitting part 14 also transmits data stored in the data buffer 12 (division suspending data) as described later together with the reception data to the division module 20 selected so as to correspond to the characteristic of the reception data. However, when the data buffer does not hold division suspending data, the data transmitting part 14 transmits only the reception data held in the reception buffer 11 to the division module 20.

Further, the result receiving part 15 receives, from the division module 20, a division result returned from the division module 20 as mentioned above, for example, a fact that the division module 20 has succeeded in dividing the data, a division suspending request, and the data that could not be divided.

Then, the division managing part 16 determines whether to write the data to the file system 30 based on the result returned from the division module 20 as mentioned above. At this moment, the division managing part 16 transmits division data that could be divided to the data writing part 17 (a data writing part). Then, the data writing part 17 actually divides the data and writes into the file system 30 (a storage device). At this moment, as described above, the division data is further divided into fragment data and made to be redundant, and then distributed and stored into a plurality of storage devices.

On the other hand, in a case that a division suspending request is returned, the division managing part 16 copies the data that could not be divided so as to temporarily store into the data buffer 12 as division suspending data. Then, the division suspending data stored in the data buffer 12 is transmitted to the division module 20 by the data transmitting part 14, together with the reception data stored in the reception buffer 11 as described above.

### [Operation]

Next, an operation of the storage system described above will be illustrated with reference to Figs. 6 to 11 and a flowchart of Fig. 12.

At first, as shown by an arrow Y1 of Fig. 6, the file system I/F 10 stores received stream data into the reception buffer as reception data (step S1). Subsequently, the module selecting part 13 checks the characteristic of the reception data stored in the reception buffer 11, and selects the division module 20 corresponding to the characteristic (step S2).

Subsequently, the data transmitting part 14 transmits both the reception data stored in the reception buffer 11 and division suspending data stored in the data buffer 12 to the division module 20 selected by the module selecting part 13 (step S3). However, because the data buffer 12 is empty in the example shown in Fig. 6, the data transmitting part 14 transmits only the reception data stored in the reception buffer 11 to the selected division module 20 as shown by an arrow Y2.

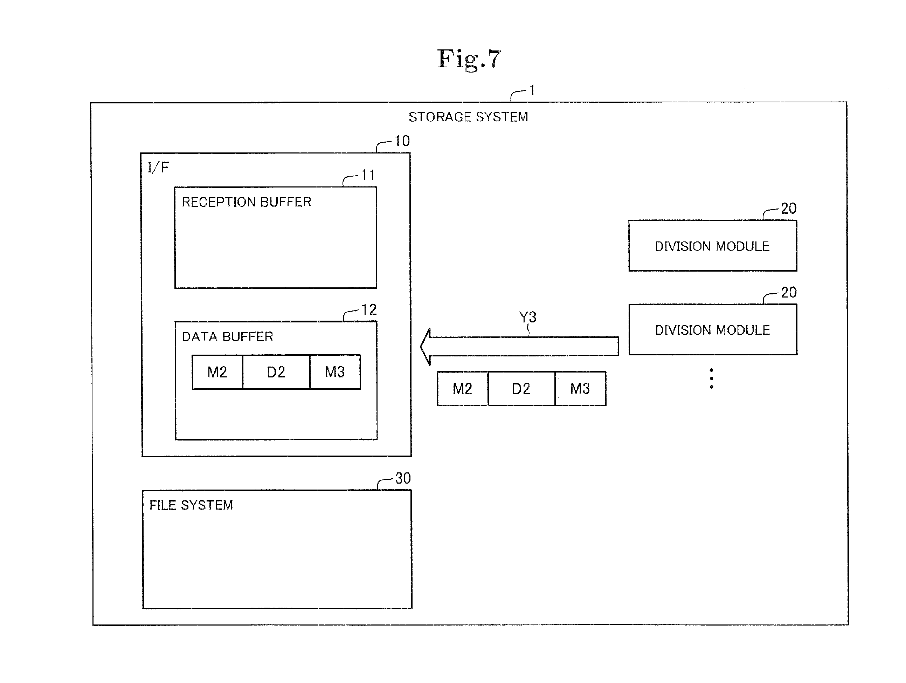

Subsequently, in the division module 20, the data receiving part 21 accepts the data transmitted from the file system I/F 10 as described above, and transmits to the division processing part 22. The division processing part 22 divides the received data, and transmits the result to the result transmitting part 23. When the division processing part 22 cannot divide the received data, the division processing part 22 transmits a division suspending request. Then, the result transmitting part 23 transmits the division result having been received to the file system I/F 10. Herein, because the data received by the division module 20 cannot be divided, a division suspending request is transmitted as shown by an arrow Y3 of Fig. 7.

In the file system I/F 10, the result receiving part 15 accepts the division result from the division module 20 (step S4), and transmits to the division managing part 16. The division managing part 16 determines whether to write the data to the file system 30 based on the result returned from the division module 20. For example, in a case that data that could be divided exists (step S5: Yes), the division managing part 16 transmits the data to the data writing part 17, and the data writing part 17 divides the accepted data and writes into the file system 30 (step S6). On the other hand, in a case that division suspending data exists (step S5: No, step S7: Yes), the division managing part 16 copies the data into the data buffer 12 (step S8). Herein, because the data accepted from the division module 20 could not be divided, the division managing part 16 stores the data into the data buffer 12 as shown in Fig. 7.

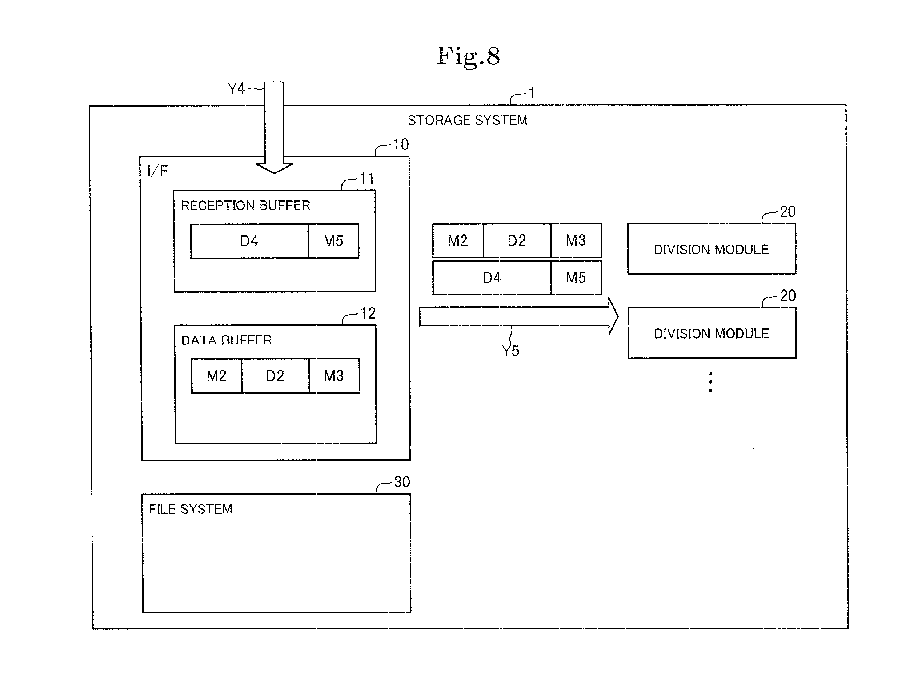

After that, when receiving a next data stream as shown by an arrow Y4 of Fig. 8 (step S9: No, step S1), the file system I/F 10 stores the received stream data into the reception buffer as reception data in the same manner as described above. Subsequently, the module selecting part 13 checks the characteristic of the reception data stored in the reception buffer 11, and selects the division module 20 corresponding to the characteristic (step S2).

Subsequently, the data transmitting part 14 transmits both the reception data stored in the reception buffer 11 and the division suspending data stored in the data buffer 12 to the division module 20 selected by the module selecting part 13 (step S3). Herein, because the division suspending data is stored in the data buffer 12 as shown in Fig. 8, the data transmitting part 14 transmits both the reception data stored in the reception buffer 11 and the division suspending data stored in the data buffer 12 to the selected division module 20.

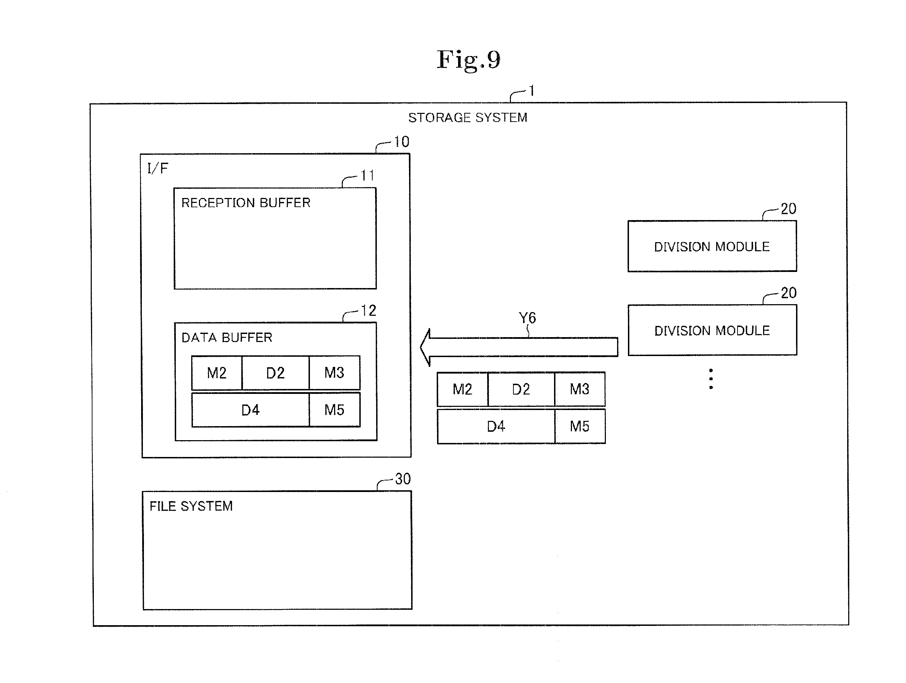

Subsequently, in the division module 20, the data receiving part 21 accepts the data transmitted from the file system I/F 10 as described above, that is, data including the reception data and the division suspending data, and transmits to the division processing part 22. The division processing part 22 divides the received data and transmits the result to the result transmitting part 23. When the division processing part 22 could not divide the data, the division processing part 22 transmits a division suspending request. Then, the result transmitting part 23 transmits the division result having been received to the file system I/F 10. Herein, because the data received by the division module 20 could not be divided, a division suspending request is transmitted as shown by an arrow Y6 of Fig. 9.

In the file system I/F 10, the result receiving part 15 accepts the division result from the division module 20 (step S4) and transmits to the division managing part 16. The division managing part 16 determines whether to write the data to the file system 30 based on the result returned from the division module 20. Herein, because the data accepted from the division module 20 could not be divided (step S5: No, step S7: Yes), the division managing part 16 stores the data into the data buffer 12 as shown in Fig. 9 (step S8).

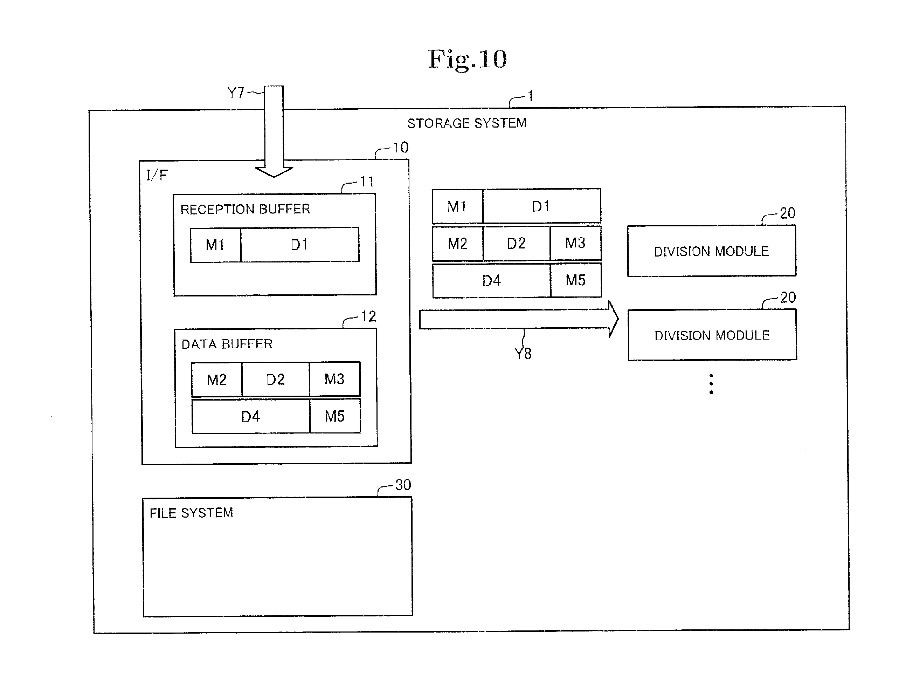

After that, when receiving a next data stream as shown by an arrow Y7 of Fig. 10 (step S9: No, step S1), the file system I/F 10 stores the received stream data into the reception buffer as reception data in the same manner as described above. Subsequently, the module selecting part 13 checks the characteristic of the reception data stored in the reception buffer 11, and selects the division module 20 corresponding to the characteristic (step S2).

Subsequently, the data transmitting part 14 transmits both the reception data stored in the reception buffer 11 and the division suspending data stored in the data buffer 12 to the division module 20 selected by the module selecting part 13 (step S3). Herein, because the division suspending data is stored in the data buffer 12 as shown in Fig. 10, the data transmitting part 14 transmits both the reception data stored in the reception buffer 11 and the division suspending data stored in the data buffer 12 to the selected division module 20.

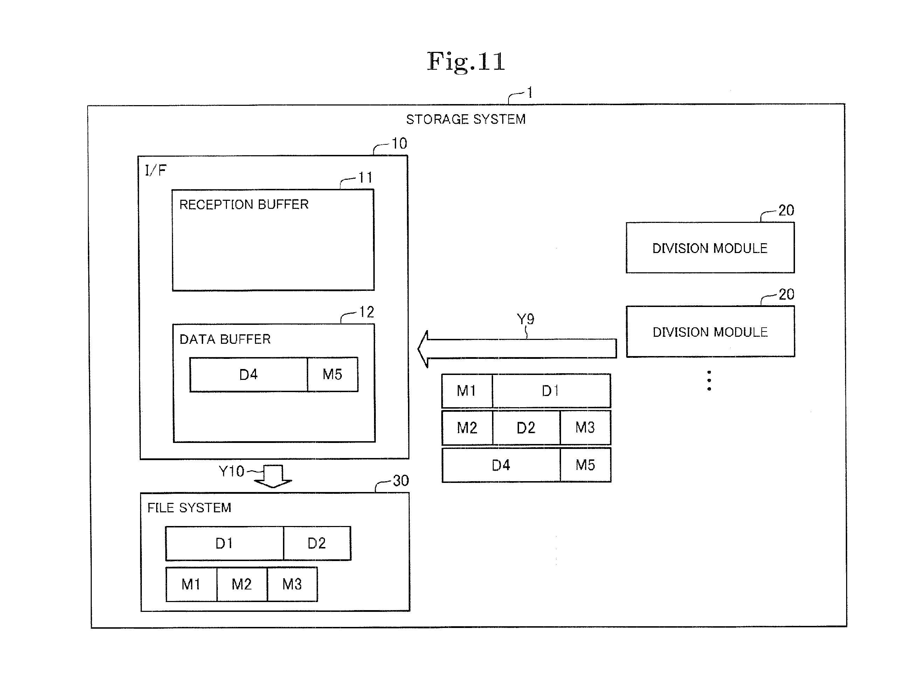

Subsequently, in the division module 20, the data receiving part 21 accepts the data transmitted from the file system I/F 10 as described above, and transmits to the division processing part 22. The division processing part 22 divides the received data and transmits the result to the result transmitting part 23. When the data could not be divided, the division processing part 22 transmits a division suspending request. Then, the result transmitting part 23 transmits the division result having been received to the file system I/F 10. Herein, it is assumed that, as shown by an arrow Y9 of Fig. 11, the data received by the division module 20 includes data that could be divided and data that could not be divided.

In the file system I/F 10, the result receiving part 15 accepts the division result from the division module 20 (step S4) and transmits to the division managing part 16. The division managing part 16 determines whether to write the data into the file system 30 based on the result returned from the division module 20. Herein, as shown in Fig. 11, of the data having been received from the division module 20, the data that could be divided (step S5: Yes) is divided and stored into the file system 30 as shown by an arrow Y10 (step S6). On the other hand, of the data having been received from the division module 20, the data that could not be divided (step S7: Yes) is stored into the data buffer 12 (step S8).

Thus, according to the present invention, a buffering process is common even if data to be written have different characteristics. Therefore, there is no need to develop a function of executing a buffering process corresponding to each of the data characteristics, and it is possible to divide stream data having different characteristics by the same buffering process. Therefore, it is possible to limit a development cost while realizing efficient data storage in a storage device, and it is possible to reduce cost. To be specific, by employing a configuration to, when it is impossible to execute a division process on received data, hold the data into a data buffer and again execute the division process on the data together with next received data, it is possible to more efficiently divide data by the same buffering process.

### <Supplementary Notes>

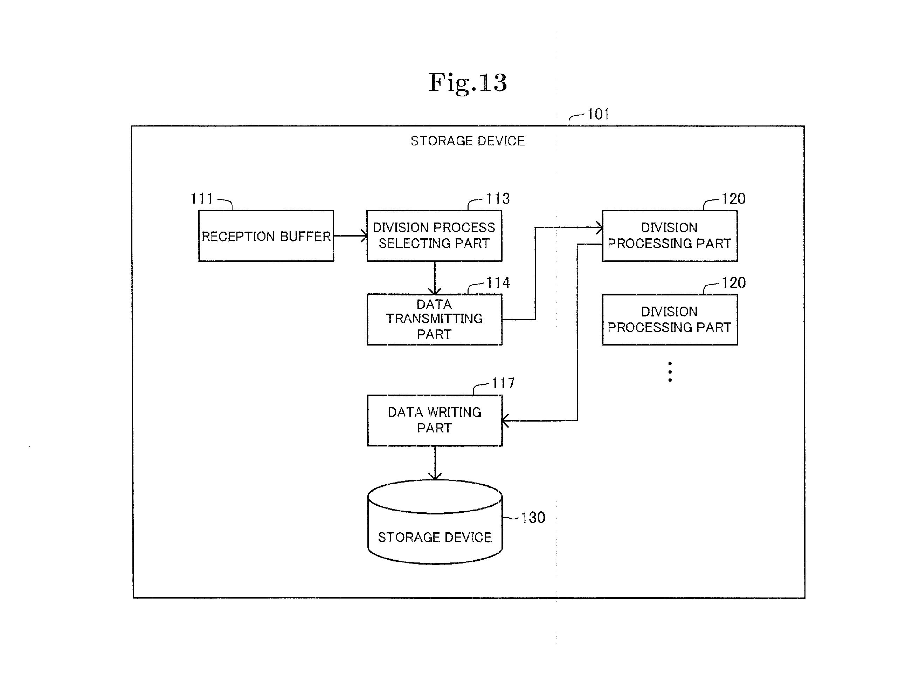

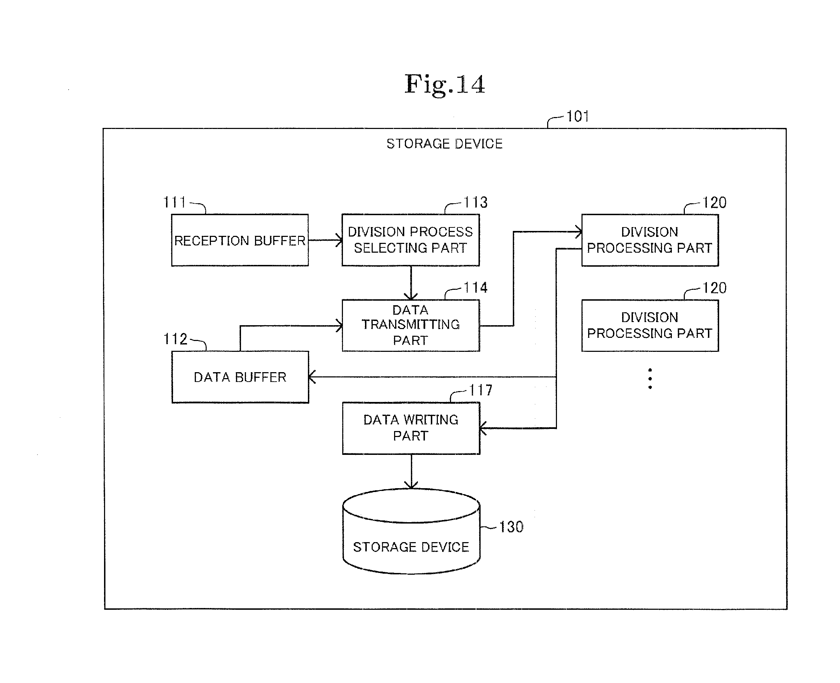

The whole or part of the exemplary embodiments disclosed above can be described as the following supplementary notes. Below, an outline of a configuration of a storage device 101 according to the present invention will be illustrated with reference to Figs. 13 and 14. Moreover, configurations of a program and a data storing method according to the present invention, will be described. However, the present invention will not be limited to the following configuration.

### (Supplementary Note 1)

A storage device 101, comprising:
a plurality of division processing parts 120, each configured so as to correspond to a characteristic of data to be written, for dividing the data in accordance with a previously set criterion; and
a data writing part 117 for writing division data obtained by division by the division processing part 120 into a storage device 130,
the storage device 101 also comprising:
   a reception buffer 111 for receiving data to be written and temporarily storing as reception data;
   a division process selecting part 113 for detecting a characteristic of the reception data stored by the reception buffer 111 and selecting the division processing part 120 configured so as to correspond to the detected characteristic of the reception data; and
   a data transmitting part 114 for transmitting the reception data stored by the reception buffer 111, to the division processing part 120 selected by the division process selecting part 113.

### (Supplementary Note 2)

The storage device 101 1 according to Supplementary Note 1, comprising a data buffer 112 for temporarily storing data that the division processing part 120 has not been able to divide, as division suspending data,
wherein the data transmitting part 114 is configured to transmit the division suspending data stored by the data buffer 112 and the reception data stored by the reception buffer 111 together to the division processing part 120 selected by the division process selecting part 113 so as to correspond to the characteristic of the reception data.

### (Supplementary Note 3)

The storage device according to Supplementary Note 2, wherein the division processing part is configured to divide data including the division suspending data and the reception data having been transmitted together from the data transmitting part, and division data as a result that the division processing part has been able to divide is written into the storage device by the data writing part, and division suspending data as a result that the division processing part has not been able to divide is stored into the data buffer.

### (Supplementary Note 4)

The storage device according to Supplementary Note 2 or 3, wherein the data transmitting part is configured to, after storing the division suspending data into the data buffer, transmit the reception data stored in the reception buffer and the division suspending data stored in the data buffer together to the division processing part.

### (Supplementary Note 5)

The storage device according to any of Supplementary Notes 1 to 4, wherein the division processing part is configured to divide the data into a data portion and a marker portion that are classified in accordance with a previously set criterion and are corresponding to each other.

### (Supplementary Note 6)

A computer program for causing an information processing device including a reception buffer for receiving data to be written and temporarily storing as reception data, to realize:
a plurality of division processing parts, each configured so as to correspond to a characteristic of data to be written, for dividing the data in accordance with a previously set criterion;
a data writing part for writing division data obtained by division by the division processing part into a storage device;
a division process selecting part for detecting a characteristic of the reception data stored by the reception buffer and selecting the division processing part configured so as to correspond to the detected characteristic of the reception data; and
a data transmitting part for transmitting the reception data stored by the reception buffer, to the division processing part selected by the division process selecting part.

### (Supplementary Note 7)

The computer program according to Supplementary Note 6, wherein the data transmitting part is configured to transmit division suspending data temporarily stored in a data buffer, which is data that the division processing part has not been able to divide, and the reception data stored by the reception buffer together to the division processing part selected by the division process selecting part so as to correspond to the characteristic of the reception data.

### (Supplementary Note 8)

A data storing method, comprising:
receiving data to be written and temporarily storing as reception data into a reception buffer;
detecting a characteristic of the reception data stored by the reception buffer and, from among a plurality of division processing parts, each configured so as to correspond to a characteristic of data to be written, for dividing the data in accordance with a previously set criterion, selecting the division processing part configured so as to correspond to the detected characteristic of the reception data;
transmitting the reception data stored in the reception buffer to the selected division processing part;
dividing transmitted data, by the division processing part; and
writing division data obtained by division by the division processing part into a storage device.

### (Supplementary Note 9)

The data storing method according to Supplementary Note 8, comprising:
temporarily storing data that the division processing part has not been able to divide, into a data buffer as division suspending data; and
when transmitting the reception data to the selected division processing part, transmitting the division suspending data stored in the data buffer together with the reception data to the division processing part selected so as to correspond to the characteristic of the reception data.

Although the present invention has been described above with reference to the respective exemplary embodiments, the present invention is not limited to the exemplary embodiments described above. The configurations and details of the present invention can be altered in various manners that can be understood by those skilled in the art within the scope of the present invention.

The present invention is based upon and claims the benefit of priority from Japanese patent application No. 2010-47410, filed on March 4, 2010, the disclosure of which is incorporated herein in its entirety by reference.

### DESCRIPTION OF REFERENCE NUMERALS

- 1: storage system
- 2: accelerator node
- 3: storage node
- 4: backup system
- 5: backup target device
- 10: file system I/F
- 11: reception buffer
- 12: data buffer
- 13: module selecting part
- 14: data transmitting part
- 15: result receiving part
- 16: division managing part
- 17: data writing part
- 20: division module
- 21: data receiving part
- 22: division processing part
- 23: result transmitting part
- 30: file system
- 101: storage device
- 111: reception buffer
- 112: data buffer
- 113: division process selecting part
- 114: data transmitting part
- 117: data writing part
- 120: division processing part
- 130: storage device

## Claims

1. A storage device, comprising:
a plurality of division processing parts, each configured so as to correspond to a characteristic of data to be written, for dividing the data in accordance with a previously set criterion; and
a data writing part for writing division data obtained by division by the division processing part into a storage device,
the storage device also comprising:
a reception buffer for receiving data to be written and temporarily storing as reception data;
a division process selecting part for detecting a characteristic of the reception data stored by the reception buffer and selecting the division processing part configured so as to correspond to the detected characteristic of the reception data; and
a data transmitting part for transmitting the reception data stored by the reception buffer, to the division processing part selected by the division process selecting part.

2. The storage device according to Claim 1, comprising a data buffer for temporarily storing data that the division processing part has not been able to divide, as division suspending data,
wherein the data transmitting part is configured to transmit the division suspending data stored by the data buffer and the reception data stored by the reception buffer together to the division processing part selected by the division process selecting part so as to correspond to the characteristic of the reception data.

3. The storage device according to Claim 2, wherein the division processing part is configured to divide data including the division suspending data and the reception data having been transmitted together from the data transmitting part, and division data as a result that the division processing part has been able to divide is written into the storage device by the data writing part, and division suspending data as a result that the division processing part has not been able to divide is stored into the data buffer.

4. The storage device according to Claim 2 or 3, wherein the data transmitting part is configured to, after storing the division suspending data into the data buffer, transmit the reception data stored in the reception buffer and the division suspending data stored in the data buffer together to the division processing part.

5. The storage device according to any of Claims 1 to 4, wherein the division processing part is configured to divide the data into a data portion and a marker portion that are classified in accordance with a previously set criterion and are corresponding to each other.

6. A program for causing an information processing device including a reception buffer for receiving data to be written and temporarily storing as reception data, to realize:
a plurality of division processing parts, each configured so as to correspond to a characteristic of data to be written, for dividing the data in accordance with a previously set criterion;
a data writing part for writing division data obtained by division by the division processing part into a storage device;
a division process selecting part for detecting a characteristic of the reception data stored by the reception buffer and selecting the division processing part configured so as to correspond to the detected characteristic of the reception data; and
a data transmitting part for transmitting the reception data stored by the reception buffer, to the division processing part selected by the division process selecting part.

7. The program according to Claim 6, wherein the data transmitting part is configured to transmit division suspending data temporarily stored in a data buffer, which is data that the division processing part has not been able to divide, and the reception data stored by the reception buffer together to the division processing part selected by the division process selecting part so as to correspond to the characteristic of the reception data.

8. A data storing method, comprising:
receiving data to be written and temporarily storing as reception data into a reception buffer;
detecting a characteristic of the reception data stored by the reception buffer and, from among a plurality of division processing parts, each configured so as to correspond to a characteristic of data to be written, for dividing the data in accordance with a previously set criterion, selecting the division processing part configured so as to correspond to the detected characteristic of the reception data;
transmitting the reception data stored in the reception buffer to the selected division processing part;
dividing transmitted data, by the division processing part; and
writing division data obtained by division by the division processing part into a storage device.

9. The data storing method according to Claim 8, comprising:
temporarily storing data that the division processing part has not been able to divide, into a data buffer as division suspending data; and
when transmitting the reception data to the selected division processing part, transmitting the division suspending data stored in the data buffer together with the reception data to the division processing part selected so as to correspond to the characteristic of the reception data.
